# EUROPEAN PATENT SPECIFICATION

(11) **EP 0 742 551 B1**
(45) Date of publication and mention of the grant of the patent: **26.09.2001**
(21) Application number: 96107296.4
(22) Date of filing: 08.05.1996
(51) Int. Cl.: G11B 5/855, G06K 1/12, G11B 5/62

(54) **Information recording medium and manufacturing method therefor**
Träger zur Informationsaufzeichnung und Herstellungsverfahren
Milieu d'enregistrement d'information et procédé de fabrication

(30) Priority: 08.05.1995 JP 13481195
(43) Date of publication of application: 13.11.1996
(73) Proprietor: DAI NIPPON PRINTING CO., LTD., Shinjuku-ku, Tokyo-to (JP)
(72) Inventor: Izumiya, Kazumi, c/o DAI Nippon Printing Co., Ltd., Tokyo-to (JP)
(74) Representative: Müller-Boré & Partner Patentanwälte

(56) References cited:
- US-A- 5 268 566
- US-A- 5 296 995

## Description

The present invention relates to an information recording medium having an information recording section for forgery prevention on a substrate, such as a card, and more specifically, to an information recording medium having a plurality of magnetic bars, arranged in the scanning direction of a magnetic head, and a manufacturing method therefor.

Conventionally, a given magnetic pattern is formed in advance on cards, such as prepaid cards, in order to prevent forgery. When the cards are actually used, the magnetic pattern is read, and whether predetermined magnetic output signals can be obtained or not is determined to check the cards for authenticity.

In general, a magnetic head wound with two coils is used to read the magnetic pattern. A constant current is caused to flow through the one coil of the magnetic head, and an induction current or voltage induced when the magnetic pattern is scanned by the magnetic head is detected by means of the other coil. The induced current is generated depending on the change of magnetic flux of the head.

For example, a ferromagnetic material is used to form the magnetic pattern. Although the magnetic pattern may be in various shapes, the so-called bar code pattern is generally used. The bar code pattern is composed of a plurality of magnetic bars or pattern elements, which are arranged in the width direction thereof. The individual magnetic bars that constitute the magnetic pattern have one or two kinds of widths or more.

The magnetic output signals can be obtained by bringing the magnetic head intimately into contact with the magnetic bar code pattern to scan it at constant speed.

The magnetic pattern can be formed by screen printing, offset printing, gravure printing, etc. These printing processes are advantageous in view of manufacturing cost.

However, pattern formation by printing involves the following peculiar problems.

According to the screen printing, for example, the number of meshes and diameter of a mesh screen are nonnegligible factors, so that reduction of the width of a print is subject to physical limits, and the recording density cannot be improved. The stability of transfer of ink is lowered in proportion to the increase of the recording density, and the print configuration is rendered uneven by leveling of the ink or the like. The printed film thickness tends to increase as the print is widened. Moreover, magnetic outputs and waveforms are so unstable that accurate information cannot be obtained with ease.

US-A-5 296 995 discloses a magnetic recording medium equipped with magnetically readable recording servo pits which are preformed on a magnetic recording medium and have different magnetic characteristics from those of a recording magnetic film.

US-A-5 268 566 discloses a bar code label base in which recesses are engraved, that is protected by a coating of a non-magnetic material.

It is the object of the invention to provide an information recording medium and a manufacturing method therefor, whereby the recording density and the accuracy of information obtained can be improved, and cards can be accurately checked for authenticity.

This object is fulfilled by an information recording medium having the features disclosed in claim 1 and by a method according to claim 11. Preferred embodiments are defined in the dependent subclaims.

Accordingly there is provided an information recording medium and a manufacturing method therefor, whereby forgery of cards can be prevented, the recording density and the accuracy of information obtained can be improved, and cards can be accurately checked for authenticity.

According to the present invention, there is provided an information recording medium capable of recording and reproducing information, which comprises a substrate and a plurality of magnetic bars formed by partially physically removing a magnetic layer with a uniform thickness so as to be arranged on the substrate in the scanning direction of a magnetic head, the magnetic bars constituting an information recording section,
characterized by a magnetic layer put on or under the information recording section.

The magnetic bars may include a plurality of kinds having the same height and different widths in the scanning direction of the magnetic head.

Recesses formed by partially physically removing the magnetic layer for the formation of the magnetic bars may include a plurality of kinds having the same depth and different widths.

Recesses formed by partially physically removing the magnetic layer for the formation of the magnetic bars may include a plurality of kinds having different depths.

The magnetic layer may be physically removed by irradiation with a laser beam.

The information recording medium may further comprise a concealing layer put on the information recording section.

The magnetic layer may be formed of a hard magnetic material.

The magnetic layer may be formed of a soft magnetic material.

The magnetic bars may extend at right angles to the scanning direction of the magnetic head.

The magnetic bars may be inclined at an angle to the scanning direction of the magnetic head.

Various patterns can be obtained, since the magnetic bars that constitute the information recording section are formed by partially physically removing the magnetic layer with the uniform thickness. If a plurality of magnetic bars having the same depth and different widths are formed, for example, all signals delivered from the magnetic bars have the same amplitude, so that accurate information can be obtained securely, and the recording density can be improved.

As described above, the information recording medium of the present invention comprises the substrate and the information recording section thereon. The information recording section includes the magnetic bars arranged in the scanning direction of the magnetic head. The magnetic bars are formed by partially physically removing the magnetic layer with the uniform thickness. Thus, cards can be prevented from being altered or forged, and improvement of the recording density, which cannot be achieved by the conventional printing processes, can be realized. Moreover, the accuracy of information obtained can be improved, so that the cards can be accurately checked for authenticity. Furthermore, proper information for each medium can be formed with ease.
FIG. 1 is a perspective view of an information recording medium not covered by the claims;
FIG. 2 is a sectional view taken along line II-II of FIG. 1;
FIGS. 3A and 3B show a specific way of detecting signals from magnetic bars of the information recording medium shown in FIG. 2;
FIGS. 4A, 4B, 4C and 4D are sectional views showing processes for manufacturing the information recording medium according to FIGS. 1-3;
FIG. 5 is a sectional view of an information recording medium according to a first embodiment of the invention;
FIG. 6 is a sectional view of an information recording medium according to a second embodiment of the invention;
FIG. 7 is a sectional view of an information recording medium according to a third embodiment of the invention;
FIGS. 8A and 8B show a specific way of detecting signals from magnetic bars of the information recording medium shown in FIG. 7;
FIG. 9 is a sectional view of an information recording medium according to a fourth embodiment of the invention;
FIG. 10 is a sectional view of an information recording medium according to a fifth embodiment of the invention;
FIG. 11 is a sectional view of an information recording medium according to a sixth embodiment of the invention;
FIGS. 12A and 12B show a specific way of detecting signals from magnetic bars of an information recording medium according to a seventh embodiment of the invention;
FIGS. 13A, 13B, 13C and 13D show a specific way of detecting signals from magnetic bars of an information recording medium according to an eigth embodiment of the invention; and
FIGS. 14A, 14B, 14C and 14D show a specific way of detecting signals from magnetic bars of an information recording medium according to a ninth embodiment of the invention.

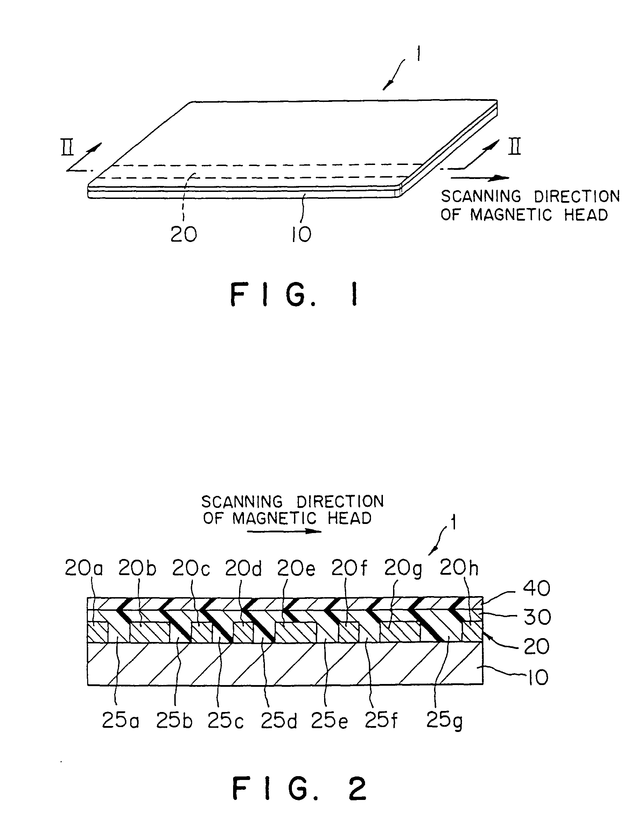

Preferred embodiments of the present invention will become understood from the following detailed description referring to the accompanying drawings. FIGS. 1 to 4 are views for illustrating an information recording medium not covered by the appended set of claims.

FIG. 1 is a perspective view of a card-type information recording medium. FIG. 2 is a sectional view taken along line II-II of FIG. 1, and diametrically shows a profile of the recording medium for a better understanding of the invention.

The information recording medium 1 of the present invention comprises a substrate 10 and an information recording section 20 formed thereon.

In consideration of heat resistance, mechanical strength, rigidity, etc., the substrate 10 may be formed of a resin, such as nylon, cellulose diacetate, cellulose triacetate, polyvinyl chloride, polystyrene, polyethylene, polypropylene, polyester, polyimide, polycarbonate, etc., a metal, such as copper, aluminum, etc., paper, or impregnated paper, or a composite material combining these materials. The thickness of the substrate 10 may be adjusted to about 0.005 to 5 mm.

For example, the information recording section 20 is provided with a plurality of magnetic bars 20a to 20h that are arranged in the scanning direction of a magnetic head, as shown in FIG. 2. Each magnetic bar has a predetermined length in the direction perpendicular to the drawing plane of FIG. 2.

The magnetic bars 20a to 20h are obtained as remainders after a plurality of recesses 25a to 25g are partially formed in a magnetic layer with a uniform thickness by physical removal. In the case where the magnetic layer is formed by applying a magnetic coating, therefore, the magnetic bars 20a to 20h normally contain a magnetic powder and a resin binder. The magnetic powder may be a hard or soft magnetic powder provided it is ferromagnetic. Hard magnetic powders may include fine magnetic particles, such as γ-Fe₂O₃, Co-clad γ-Fe₂O₃, Fe₃O₄, Fe, Fe-Cr, Fe-Co, Co-Cr, Co-Ni, Ba ferrite, Sr ferrite, CrO₂, etc. Soft magnetic powders may include magnetic alloy materials formed of Al, Si, Fe, etc., high-permeability metallic materials such as Permalloy, sendust, Fe, etc., ferrites such as Mn-Zn ferrite, Co-Zn ferrite, Ni-Zn ferrite, etc., metallic amorphous materials, and the like.

The resin binder (or ink vehicle) in which the magnetic powder is dispersed may be selected from resins including butyral resin, vinyl chloride-vinyl acetate copolymer resin, urethane resin, polyester resin, cellulose resin, acrylic resin, styrene-maleic acid copolymer resin, etc. If necessary, the binder is loaded with a rubber resin, such as nitrile rubber, or urethane elastomer. In consideration of heat resistance, moreover, the binder may be formed of polyamide, polyimide, polyether sulfone, or other resin that has a high glass transition temperature (Tg) or a system whose Tg is raised by curing reaction. A dispersion of magnetic particles in the resin binder or ink vehicle may be loaded as required with a surfactant, silane coupling agent, plasticizer, wax, silicone oil, pigment such as carbon, etc.

The magnetic bars 20a to 20h may be formed from the magnetic material by vacuum deposition, sputtering, plating, or the like. A specific manufacturing method will be described in detail later.

According to the present invention, (1) the magnetic bars 20a to 20h, which constitute the information recording section 20, may be formed having the same height and at least two different widths (in the scanning direction of the magnetic head). Alternatively, (2) the recesses 25a to 25g, which constitute the information recording section 20, may be formed having the same depth and at least two different widths (in the scanning direction of the magnetic head). By doing this, differences between the respective waveforms of reader outputs can be discriminated as data in the form of digital signal values, 0 and 1. In the former case (1), the digital signals 0 and 1 are detected mainly by the difference between the respective widths of the magnetic bars, so that the recesses 25a to 25g may have the same or different widths. In the latter case (2), the digital signals 0 and 1 are detected mainly by the difference between the respective widths of the recesses, so that the magnetic bars 20a to 20h may have the same or different widths. Alternatively, the digital signals may be detected by combining those two methods (1) and (2) (FM recording).

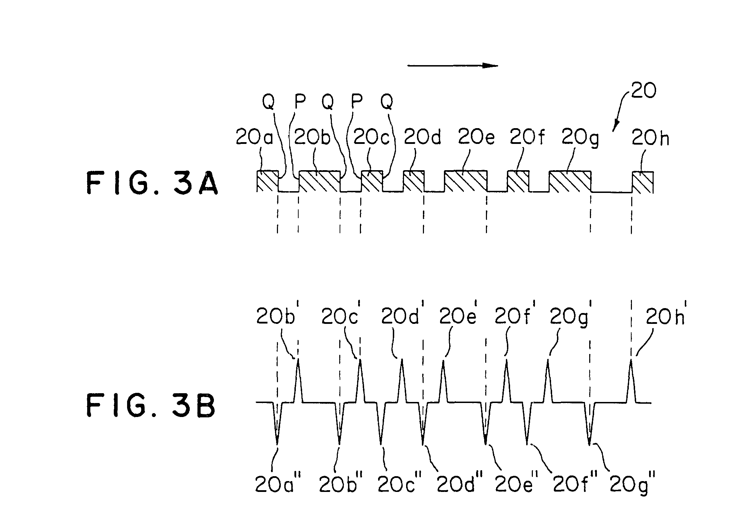

Referring now to FIGS. 3A and 3B, a specific way of detecting the signals will be described. FIG. 3A illustrates the information recording section 20 shown in FIG. 2. FIG. 3B shows a magnetic output signal waveform obtained when the information recording section 20 is scanned from left to right, as indicated by the arrow in FIG. 3A, at a uniform rate by the magnetic head. In the magnetic output signal waveform, as shown in FIG. 3B, a negative pulse 20a" is generated corresponding to the trailing edge Q of the magnetic bar 20a. Then, a positive pulse 20b' and a negative pulse 20b" are generated corresponding to the leading and trailing edges P and Q of the magnetic bar 20b, respectively. These pulses are successively generated corresponding individually to the magnetic bars.

Since the magnetic bars are formed by physically removing parts of the magnetic layer with the uniform thickness, as mentioned before, positive pulses 20b' to 20h' and negative pulses 20" to 20g" have equal amplitudes.

Although the magnetic bars, which form a magnetic pattern, have two different widths as described above, they may alternatively have three widths or more.

Normally, the widths (in the scanning direction of the magnetic head) of the magnetic bars 20a to 20h are adjusted to about 30 *µ*m to 1 mm. Likewise, the widths of the recesses 25a to 25g are normally adjusted to about 30 *µ*m to 1 mm. The height of the magnetic bars 20a to 20h (depth of the recesses 25a to 25g) is normally adjusted to 2 to 30 *µ*m, preferably 5 to 20 *µ*m, for the case of pattern formation by printing, and to 100 to 1,000 angstroms, preferably 400 to 600 angstroms, for the cases based on the vacuum deposition, sputtering, and plating.

Preferably, a concealing layer 30 for causing it difficult to discriminating the magnetic pattern by eye and a protective layer 40 for protective and decorative effects are formed on the information recording section 20 that includes the magnetic bars 20a to 20h, as shown in FIG. 2.

The concealing layer 30 and the protective layer 40 (including decoration) are formed by a conventional coating or printing method, such as gravure, roll, knife-edge, or offset coating or printing, using a pigmented coating or ink with the following composition. The coating or ink is based on a binder that is loaded with various pigments depending on the desired color. Available materials for the binder may include cellulose derivatives, such as ethyl cellulose, cellulose nitrate, ethyl hydroxyethyl cellulose, cellulose acetate propionate, cellulose acetate, etc., styrene resins or their copolymers, such as polystyrene, poly-α-methylstyrene, etc., acrylic or methacrylic resins or their copolymers, such as polymethyl methacrylate, polyethyl methacrylate, polyethyl acrylate, polybutyl acrylate, etc., and rosin ester resins, such as rosin, rosin-modified maleic resin, rosin-modified phenolic resin, polymeric rosin, etc. The available binder materials may further include polyvinyl acetate resins, coumarone resin, vinyltoluene resin, vinyl chloride resin, polyester resin, polyurethane resin, butyral resin, etc. If necessary, titanium oxide, alumina powder, micro silica, etc. may be added to the binder to improve its head cleaning effect. If necessary, moreover, the binder may be loaded with a plasticizer, stabilizer, wax, grease, drying agent, auxiliary drying agent, curing agent, thickening agent, and/or dispersant, and is then fully kneaded in a solvent or diluent.

In forming the concealing layer 30, the recesses 25a to 25g of the information recording section 20 should preferably be filled up with a concealing layer forming material, as shown in FIG. 2, in order to improve the surface smoothness.

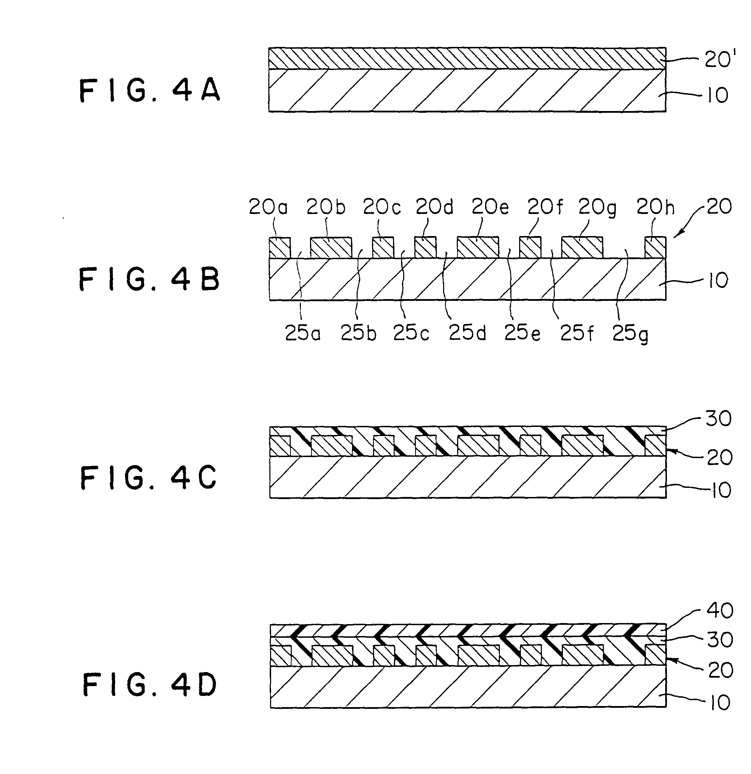

Referring now to FIG. 4, a specific method for manufacturing the information recording medium 1 will be described.

First, the sheetlike substrate 10 is prepared, and a magnetic layer 20' is formed on the substrate 10 (FIG. 4A). The magnetic layer 20' may be formed by applying the previously compounded magnetic coating by a conventional method of application, such as silk screen printing or gravure, roll, or knife-edge coating or printing. Alternatively, the magnetic layer 20' may be formed from a magnetic material by vacuum deposition, sputtering, plating, or the like.

The magnetic layer 20' may be formed on the whole surface of the substrate 10. Generally, however, the layer 20' is formed in the shape of a stripe on only that portion which is essential to the formation of the information recording section, in consideration of economical efficiency. While the magnetic layer 20' must naturally be formed having a uniform thickness, the aforementioned conventional continuous method of application can ensure a thickness uniform enough.

Subsequently, the uniform-thickness magnetic layer 20' is partially physically removed to form the recesses 25a to 25g (which reach the substrate 10), as shown in FIG. 4B, whereupon the magnetic bars 20a to 20h having the predetermined pattern are arranged to form the information recording section 20.

The magnetic layer 20' is partially physically removed by, for example, applying laser beams to positions corresponding to the recesses 25a to 25g, applying electron rays, electrical discharge breaking, or routing. Since the information recording section 20 is formed in this manner, informations as permanent records to be loaded into the recording section 20 can be easily prepared as individual data one after another. These methods are adapted for the manufacture of the so-called ID cards.

When using laser beams, the type, waveform, power, etc. of the laser used should only be suitably set in consideration of the properties of the magnetic layer 20' to be partially removed, the width of the stripe to be removed, etc.

A rare gas ion laser, such as an He-Ne laser, He-Cd laser, argon laser (0.488 *µ*m continuous oscillation, 0.1 to 20 W), etc., a carbon dioxide gas laser (10.6 *µ*m continuous oscillation, 1 W to 10 kW), or a metallic vapor laser may be used as a gas laser. Also, a pulse excitation solid laser, such as a ruby laser (0.6943 *µ*m pulse oscillation, 10 to 1,000 J), Nd glass laser (1.06 *µ*m pulse oscillation, 10 to 1,000 J), or a continuous excitation solid laser, such as a ruby laser, Nd glass laser, Nd:YAG laser (1.06 *µ*m continuous oscillation, 1 to 200 W), Nd:YAlO₃ laser, etc., may be used as a solid laser. Moreover, a dye laser, Raman laser, chelate laser, Nd³⁺ liquid laser, etc. may be used as a liquid laser, and a GaAs diode laser or the like as a semiconductor laser.

Among these lasers, a CO₂ gas laser (0.5 to 10 W) of 10.6 *µ*m wavelength, Ar gas laser (0.5 to 10 W) of 0.488- or 0.5145 *µ*m wavelength, Nd:YAG laser (0.5 to 10 W) of 1.06 *µ*m wavelength, and semiconductor Ga Al As laser (0.5 to 10 W) of 810 nm wavelength are preferred examples. If the laser output is too high, the pattern accuracy is lowered as the substrate is damaged by heat and the binder resin, which constitutes the magnetic layer, undergoes thermal shrinkage. If the output is too low, on the other hand, the pattern cannot be eliminated satisfactorily.

For the discrimination of the digital signals 0 and 1, as mentioned before, the magnetic bars 20a to 20h (1), which constitute the information recording section 20, may be formed having at least two different widths (in the scanning direction of the magnetic head). Alternatively, the recesses 25a to 25g (2), which constitute the information recording section 20, may be formed having at least two different widths (in the scanning direction of the magnetic head).

Normally, the information recording section 20, which includes the magnetic bars 20a to 20h, is coated with the concealing layer 30 so that the respective patterns of the magnetic bars are concealed (FIG. 4C). In order to maintain the surface smoothness, in this case, the recesses 25a to 25g of the information recording section 20 should preferably be filled up with a concealing layer forming material, as mentioned before.

Normally, the concealing layer 30 is coated with the protective layer 40 for protective and decorative effects (FIG. 4D).

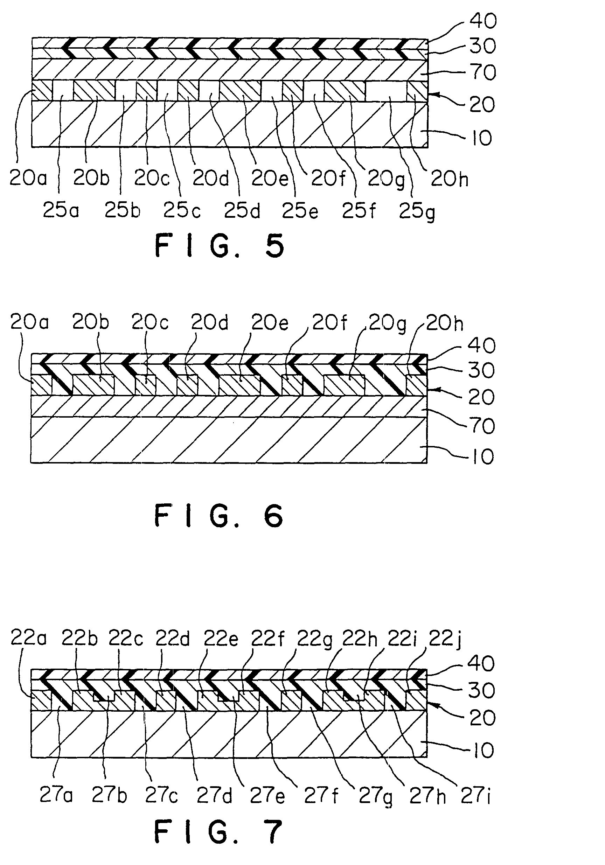

Referring now to FIGS. 5 and 6, first and second embodiments of the present invention will be described.

FIG. 5 is a sectional view of an information recording medium according to the first embodiment of the invention. The information recording medium of the first embodiment differs from that of the above given example (FIG. 2) in that a magnetic layer 70 capable of magnetic recording is further provided between the information recording section 20 and the concealing layer 30. For example, reloadable variable information can be recorded on the magnetic layer 70.

In this case, the magnetic layer 70 is a ferromagnetic material. If the magnetic layer 70 is formed by applying the so-called magnetic coating, it normally contains a magnetic powder and a resin binder. The magnetic powder is a ferromagnetic powder, e.g., hard magnetic powder.

Furthermore, the magnetic layer 70 and the magnetic bars 20a to 20h of the information recording section 20 may be formed of the same or different materials. If the same material is used, it is advisable not to fill the recesses 25a to 25g with the material of the magnetic layer 70, as shown in FIG. 5. Actually, however, it is difficult to do this. Preferably, in this case, a primer layer should be provided between the magnetic layer 70 and the information recording section 20. For example, the primer layer may be formed of the same material of the concealing layer or the protective layer.

FIG. 6 is a sectional view of an information recording medium according the second embodiment of the invention. The information recording medium of the second embodiment differs from that of the first embodiment (FIG. 5) in that a magnetic layer 70 capable of magnetic recording is further provided between the substrate 10 and the information recording section 20 that includes the magnetic bars. For example, reloadable variable information can be recorded on the magnetic layer 70. The magnetic layer 70 and the magnetic bars 20a to 20h of the information recording section 20 may be formed of the same or different materials.

In this case, the magnetic layer 70, like the one shown in FIG. 5, is a ferromagnetic material having the same composition as aforesaid.

Referring now to FIG. 7, a third embodiment of the present invention will be described.

FIG. 7 is a sectional view of an information recording medium according to the third embodiment of the invention. The information recording medium of the third embodiment basically differs from that of the above given example (FIG. 2) in that recesses, which are formed by partially physically removing the magnetic layer, have different depths. The different depths of the recesses cause peak differences between the respective waveforms of the reader outputs (the deeper the recesses, the higher the outputs are). These differences are discriminated as the digital signal values, 0 and 1. The depths of the recesses can be adjusted by regulating the energy of the laser beams applied, for example.

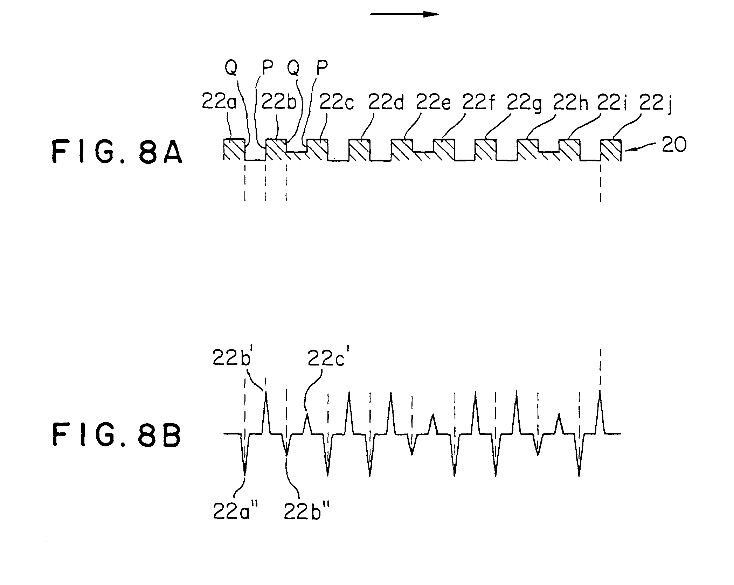

Referring now to FIGS. 8A and 8B, a specific way of detecting the signals will be described. FIG. 8A illustrates the information recording section 20 shown in FIG. 7. FIG. 8B shows a magnetic output signal waveform obtained when the information recording section 20 is scanned from left to right, as indicated by the arrow in FIG. 8A, at a uniform rate by the magnetic head. In the magnetic output signal waveform, as shown in FIG. 8B, a negative pulse 22a" is generated corresponding to the trailing edge Q of the magnetic bar 22a. Then, a positive pulse 22b' and a negative pulse 22b" are generated corresponding to the leading and trailing edges P and Q of the magnetic bar 22b, respectively. These pulses are successively generated corresponding individually to the magnetic bars. Since the recesses, which are formed by partially physically removing the magnetic layer, have the different depths (two depths according to the this embodiment), the peak differences are caused between the respective waveforms of the reader outputs, and can be discriminated as the digital signal values, 0 and 1, as mentioned before.

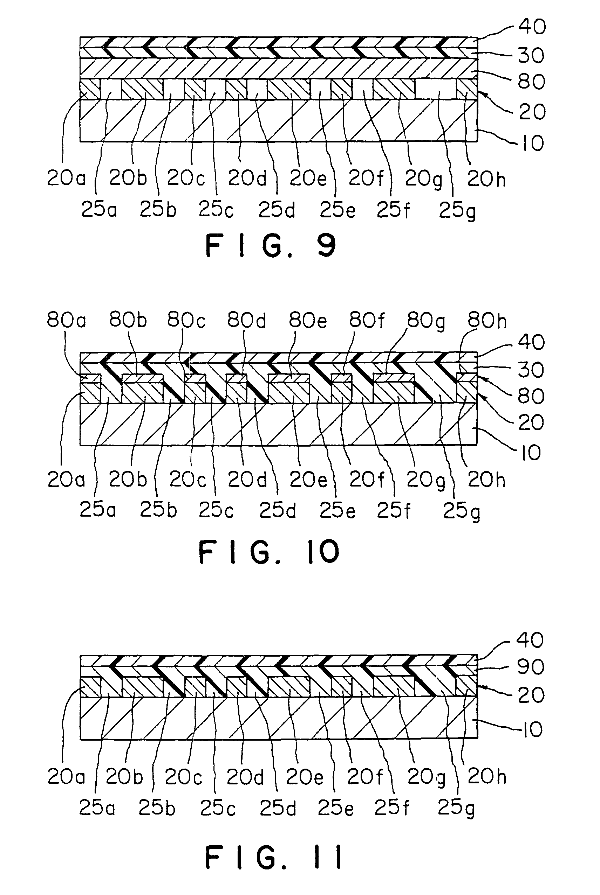

FIG. 9 shows a fourth embodiment of the present invention. According to the this embodiment, a magnetic layer 80, which is formed of soft magnetic material, is provided between the magnetic bars 20a to 20h and the concealing layer 30.

In this case, there are advantages that the presence of the magnetic bars 20a to 20h cannot be discriminated by the magnetic viewer or the like.

FIG. 10 shows a fifth embodiment of the present invention. A magnetic layer 80, which is formed of soft magnetic material, is also provided in this embodiment. According to this fifth embodiment, however, the magnetic layer 80 is cut together with the magnetic bars 20a to 20h by means of a laser, thereby forming magnetic layers 80a to 80h, as the bars 20a to 20h are formed by the laser after the layer 80 is formed on the bars 20a to 20h.

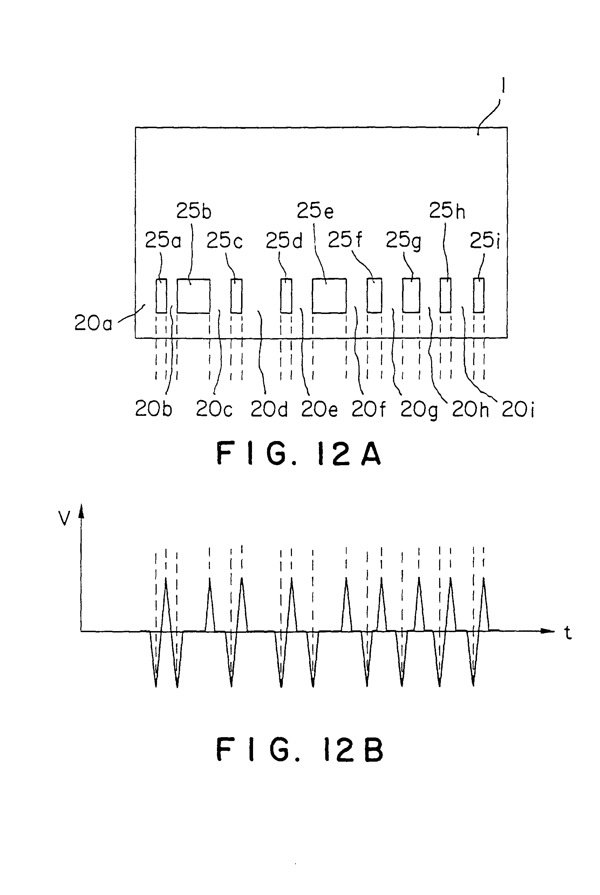

FIG. 11 shows a sixth embodiment of the present invention. According to this embodiment, the magnetic bars 20a to 20h are concealed under a concealing layer 90 which contains soft magnetic material.

In this case, also, there are advantages that the presence of the magnetic bars 20a to 20h cannot be discriminated by the magnetic viewer or the like.

FIGS. 12, 13 and 14 show seventh, eigth, and ninth embodiments, respectively, of the present invention. Since the recesses 25a to 25g, which form the magnetic bars 20a to 20h, are subjected to laser working according to the invention, the angles of inclination of the magnetic bars or the recesses to the scanning direction can be set freely. Thus, the desired information to be read out can be selected in accordance with the relationship between the respective angles of inclination of the recesses and the magnetic head.

First, in the seventh embodiment shown in FIGS. 12A and 12B, recesses 25a to 25i are formed extending at right angles to the scanning direction of the magnetic head by means of a laser, and in this case, the magnetic head is held at right angles to the scanning direction. Thus, the waveforms of output signals correspond to the recesses 25a to 25i, as shown in FIG. 12B.

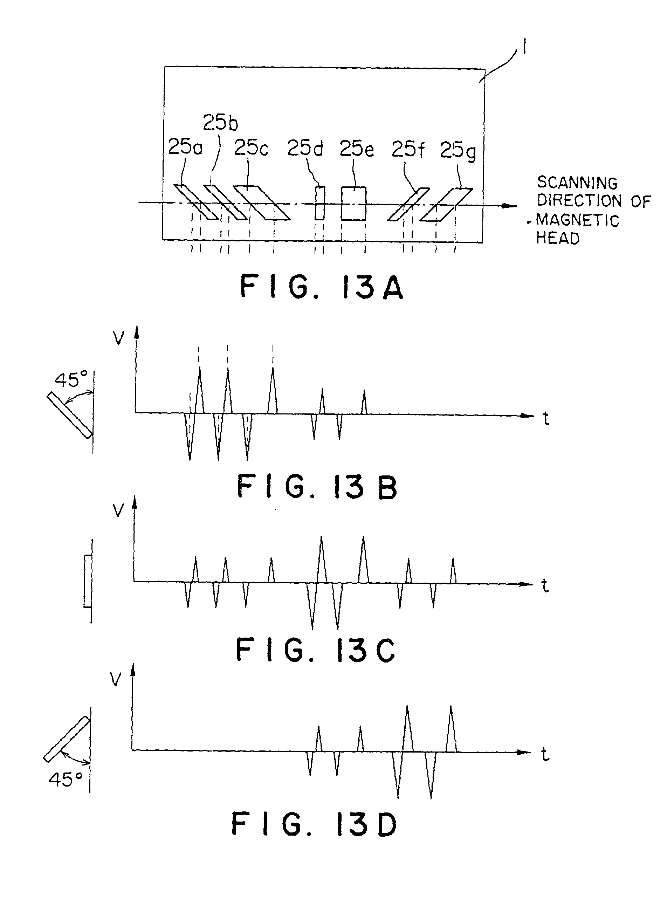

In the eigth embodiment shown in FIGS. 13A, 13B, 13C and 13D, recesses 25a to 25g are inclined at 45° to the head scanning direction. In the case where the magnetic head is tilted at 45°, as shown in FIG. 13B, normal signals are read from the recesses 25a, 25b and 25c that are inclined in the same direction as the head, signals of lowered output levels from the perpendicular recesses 25d and 25e, and no signals from the recesses 25f and 25g that are reversely inclined at 45 . In the case where the magnetic head is held at right angles to the scanning direction, signals are read from all the recesses 25a to 25g, although their output levels are somewhat lower than those of the signals read by the tilted magnetic head, as shown in FIG. 13C. In the case of the magnetic head is reversely tilted at 45°, as shown in FIG. 13D, signals are read from the recesses 25f and 25g that are reversely inclined at 45°, while no signals are read from the recesses 25a, 25b and 25c that are inclined at 45° in the same direction as the head.

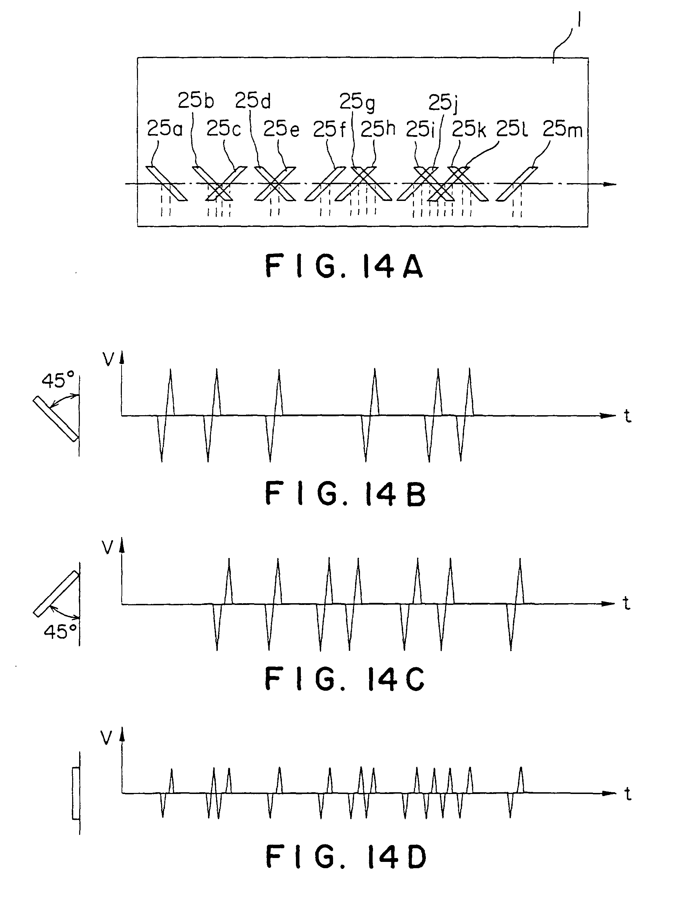

In the ninth embodiment shown in FIGS. 14A, 14B, 14C and 14D, recesses 25b and 25c cross each other, recesses 25d an 25e cross each other, and recesses 25g, 25h, 25i, 25j, 25k and 251 cross one another. In the case where the magnetic head is tilted at 45', as shown in FIG. 14B, signals are read from the recesses 25a, 25b, 25d, 25g, 25i and 25k that are inclined in the same direction as the head. Also in the case where the magnetic head is reversely tilted at 45° , as shown in FIG. 14C, signals are read from the recesses 25c, 25e, 25f, 25h, 25j, 25l and 25m that are inclined in the same direction as the head. In the case where the magnetic head is held at right angles to the scanning direction, moreover, signals are read from all the recesses 25a to 25m, although their output levels are somewhat lower than those of the signals read by the tilted magnetic head, as shown in FIG. 14D.

According to the embodiments of FIGS. 12 to 14, as described above, the angles of inclination of the magnetic bars or the recesses to the head scanning direction can be set freely. Thus, the desired information to be read out can be selected in accordance with the relationship between the respective angles of inclination of the recesses and the magnetic head.

The following is a detailed description of specific examples according to the present invention.

### [Example 1]

First, a magnetic coating having the following composition was prepared to form a magnetic layer.

| (Composition of Magnetic Coating) | |
|---|---|
| Soft magnetic powder | 70 parts by weight |
| Vinyl chloride-vinyl acetate copolymer resin | 4 parts by weight |
| Polyurethane resin | 4 parts by weight |
| Organic bentonite | 0.4 parts by weight |
| Organic solvent (isophorone/butyl carbitol acetate = 2/1) | 21.6 parts by weight |

Then, a polyethylene terephthalate card (188 *µ* m thick) was prepared as an object of printing (substrate), and coated with a magnetic coating to form a stripe by silk screen printing. Thereafter, the magnetic coating was left to stand at room temperature and dried, whereupon a magnetic layer (magnetic stripe) 5 *µ* m thick, 7 mm wide, and 85 mm long was obtained.

Subsequently, the magnetic layer was partially physically removed in the direction perpendicular to the longitudinal direction of the stripe by means of a Nd:YAG laser beam with a wavelength of 1.06 *µ*m and output of 5 W. By doing this, two types of magnetic bars 85 *µ*m and 170 *µ*m wide and 5 *µ*m deep were alternately arranged to form the information recording section. The width of the recesses was fixed at 85 *µ*m. A concealing layer ink compound having the following composition was applied to a thickness of 3 &Lm on the information recording section to form the concealing layer by silk screening, whereupon an information recording medium sample 1 according to the present invention was obtained.

| (Concealing Layer Ink Compound) | |
|---|---|
| Aluminum powder | 20 parts by weight |
| Polyurethane resin | 18 parts by weight |
| Cyclohexane | 31 parts by weight |
| Toluene | 31 parts by weight |

### [Example 2]

Using the following composition in place of the composition of the magnetic coating of Example 1, a magnetic layer with a thickness of 5 *µ*m was formed by gravure coating. No concealing layer was provided on the information recording section after laser working. An information recording medium sample 2 according to the present invention was prepared in the same manner as in Example 1 except for those particulars.

| (Composition of Magnetic Coating) | |
|---|---|
| Barium ferrite | 70 parts by weight |
| Polyurethane resin | 12 parts by weight |
| Toluene | 20 parts by weight |
| Methyl ethyl ketone | 15 parts by weight |
| Methyl isobutyl ketone | 15 parts by weight |
| Isocyanate curing agent | 2 parts by weight |

### [Comparative Example 1]

A screen printing plate having inked sections corresponding to pattern elements of the information recording section of Example 1 was prepared as a printing plate.

Then, a magnetic ink (viscosity: 7,000 cps (by Brookfield viscometer at 25°C and 60 rpm)) having the following composition was prepared.

| (Composition of Magnetic Ink) | |
|---|---|
| Soft magnetic powder | 70 parts by weight |
| Vinyl chloride-vinyl acetate copolymer resin | 4 parts by weight |
| Polyurethane resin | 4 parts by weight |
| Organic bentonite | 0.4 parts by weight |
| Organic solvent (isophorone/butyl carbitol acetate = 2/1) | 21.6 parts by weight |

Then, a polyethylene terephthalate card (188 *µ* m thick) was prepared as an object of printing, and subjected to silk screen printing. Thereafter, the magnetic ink was left to stand at room temperature and dried to form a magnetic pattern (magnetic bar pattern), whereupon a comparative information recording medium sample 1 was obtained.

### [Comparative Example 2]

Using the following ink composition in place of the composition of the magnetic ink of Comparative Example 1, a concealing layer (similar to that of Example 1) was formed after forming a magnetic pattern (magnetic bar pattern). A comparative information recording medium sample 2 was prepared in the same manner as in Comparative Example 1 except for those particulars.

| (Composition of Magnetic Ink) | |
|---|---|
| Barium ferrite | 70 parts by weight |
| Polyurethane resin | 12 parts by weight |
| Organic bentonite | 0.4 parts by weight |
| Organic solvent (isophorone/butyl carbitol acetate = 2/1) | 32.4 parts by weight |
| Isocyanate curing agent | 2 parts by weight |

Using a tester (magnetic card evaluator EMMC-3 produced by Sanetic Co., Ltd.), magnetic output signals from the magnetic pattern were detected to check the peak values for uniformity for the information recording medium samples 1 and 2 according to the present invention and the comparative information recording medium samples 1 and 2 prepared in the aforementioned manner. Thereupon, it was confirmed that variations in the peak values were as narrow as about ±5% in the cases of the information recording medium samples 1 and 2. In the cases of the comparative information recording medium samples 1 and 2, on the other hand, variations in the peak values were found to be as wide as ±20%.

Thus, according to the results of comparison between the four examples described above, it is evident that variations in the peak values are much narrower in the case of the present invention where the magnetic layer is physically removed by means of laser beams, without regard to the type of the magnetic material, soft or hard, or the presence of the concealing layer.

While the presently preferred embodiments of the present invention have been shown and described, it is to be understood that this disclosure is for the purpose of illustration and that various changes and modifications may be made without departing from the scope of the invention as set forth in the appended claims.

## Claims

1. An information recording medium capable of recording and reproducing information, comprising a substrate (10), and a plurality of magnetic bars (20a, 20b, 20c,---), wherein
said magnetic bars (20a,---) are formed by partially physically removing a magnetic layer (20') with a uniform thickness so as to be arranged on the substrate (10) in the scanning direction of a magnetic head, the magnetic bars (20a,---) constituting an information recording section (20),
**characterized by** a magnetic layer (70, 80) put on or under the information recording section (201).

2. The information recording medium according to claim 1, **characterized in that** said magnetic bars (20a,--) include a plurality of kinds having the same height and different widths in the scanning direction of the magnetic head.

3. The information recording medium according to one or more of the preceding claims, **characterized in that** recesses (25a, 25b, 25c,--) formed by partially physically removing the magnetic layer (20') for the formation of the magnetic bars (20a,--) include a plurality of kinds having the same depth and different widths.

4. The information recording medium according to one or more of the preceding claims, **characterized in that** recesses (25a,---) formed by partially physically removing the magnetic layer (20') for the formation of the magnetic bars (20a,---) include a plurality of kinds having different depths.

5. The information recording medium according to one or more of the preceding claims, **characterized in that** said magnetic layer (20') is physically removed by irradiation with a laser beam.

6. The information recording medium according to one or more of the preceding claims, **characterized by** further comprising a concealing layer (30) put on the upper one of the information recording section (20) or the magnetic layer (70,80).

7. The information recording medium according to one or more of the preceding claims, **characterized in that** said magnetic layer (70) is formed of a hard magnetic material.

8. The information recording medium according to claims 1 to 6, **characterized in that** said magnetic layer (80) is formed of a soft magnetic material.

9. The information recording medium according to one or more of the preceding claims, **characterized in that** said magnetic bars (20a,--) extend at right angles to the scanning direction of the magnetic head.

10. The information recording medium according to claims 1 to 8, **characterized in that** said magnetic bars (20a,--) are inclined at an angle to the scanning direction of the magnetic head.

11. A method for manufacturing an information recording medium capable of recording and reproducing information, comprising the steps of:
forming a magnetic layer (20') with a uniform thickness on a substrate (10); and
partially physically removing the magnetic layer (20') so that a plurality of magnetic bars (20a, 20b, 20c,--) constituting an information recording section (20) are arranged on the substrate (10) in the scanning direction of a magnetic head,
**characterized by** comprising a step for additionally putting a magnetic layer (70, 80) on or under the information recording section (20).

12. The method for manufacturing an information recording medium according to claim 11, **characterized in that** said magnetic bars (20a,---) include a plurality of kinds having the same height and different widths in the scanning direction of the magnetic head.

13. The method for manufacturing an information recording medium according to claim 11 or 12, **characterized in that** recesses (25a, 25b, 25c,---) formed by partially physically removing the magnetic layer (20') for the formation of the magnetic bars (20a,---) include a plurality of kinds having the same depth and different widths.

14. The method for manufacturing an information recording medium according to one or more of the claims 11 - 13, **characterized in that** recesses (25a,---) formed by partially physically removing the magnetic layer (20') for the formation of the magnetic bars (20a,---) include a plurality of kinds having different depths.

15. The method for manufacturing an information recording medium according to one or more of the claims 11 - 14, **characterized in that** said process for physically removing the magnetic layer (20') includes applying a laser beam.

16. The method for manufacturing an information recording medium according to one or more of the claims 11 - 15, **characterized by** further comprising a step for additionally putting a concealing layer (30) on the upper one of the information recording section (20) or the magnetic layer (70,80).

17. The method for manufacturing an information recording medium according to claim 11, **characterized in that** said magnetic layer (70) is formed of a hard magnetic material.

18. The method for manufacturing an information recording medium according to claim 11, **characterized in that** said magnetic layer (80) is formed of a soft magnetic material.

19. The method for manufacturing an information recording medium according to one or more of the claims 11 - 18, **characterized in that** said magnetic bars (20a,---) extend at right angles to the scanning direction of the magnetic head.

20. The method for manufacturing an information recording medium according to one or more of the claims 11 - 18, **characterized in that** said magnetic bars (20a,---) are inclined at an angle to the scanning direction of the magnetic head.

## Patentansprüche

1. Informationsaufzeichnungsmedium, das fähig ist, Information aufzuzeichnen und zu reproduzieren, umfassend ein Substrat (10) und eine Mehrzahl von Magnetstreifen bzw. Magnetbalken (20a, 20b, 20c, ...), worin
die Magnetbalken (20a, ...) durch teilweises physikalisches Entfernen einer Magnetschicht (20') mit einer gleichmäßigen Dicke ausgebildet sind, um auf dem Substrat (10) in der Abtastrichtung eines Magnetkopfs angeordnet zu sein, wobei die Magnetbalken (20a, ...) einen Informationsaufzeichnungsabschnitt (20) ausbilden,
**gekennzeichnet durch** eine Magnetschicht (70, 80), die auf dem Informationsaufzeichnungsabschnitt (20) auf- bzw. an- bzw. untergebracht ist.

2. Informationsaufzeichnungsmedium nach Anspruch 1, **dadurch gekennzeichnet, daß** die Magnetbalken (20a, ...) eine Mehrzahl von Arten beinhalten, die dieselbe Höhe und unterschiedliche Breiten in der Abtastrichtung des Magnetkopfs aufweisen.

3. Informationsaufzeichnungsmedium nach einem oder mehreren der vorhergehenden Ansprüche, **dadurch gekennzeichnet, daß** Ausnehmungen (25a, 25b, 25c, ...), die durch teilweises physikalisches Entfemen der Magnetschicht (20') für die Ausbildung der Magnetbalken (20a, ...) ausgebildet sind, eine Mehrzahl von Arten beinhalten, die dieselbe Tiefe und unterschiedliche Breiten aufweisen.

4. Informationsaufzeichnungsmedium nach einem oder mehreren der vorhergehenden Ansprüche, **dadurch gekennzeichnet, daß** Ausnehmungen bzw. Vertiefungen (25a, ...), die durch teilweises physikalisches Entfernen der Magnetschicht (20') für die Ausbildung der Magnetbalken (20a, ...) ausgebildet sind, eine Mehrzahl von Arten mit unterschiedlichen Tiefen beinhalten.

5. Informationsaufzeichnungsmedium nach einem oder mehreren der vorhergehenden Ansprüche, **dadurch gekennzeichnet, daß** die Magnetschicht (20') physikalisch durch Bestrahlen mit einem Laserstrahl entfernt ist.

6. Informationsaufzeichnungsmedium nach einem oder mehreren der vorhergehenden Ansprüche, **dadurch gekennzeichnet, daß** sie weiters eine Abdeckschicht (30) umfaßt, die an den oberen Informationsaufzeichnungsabschnitt (20) oder auf der Magnetschicht angebracht.

7. Informationsaufzeichnungsmedium nach einem oder mehreren der vorhergehenden Ansprüche, **dadurch gekennzeichnet, daß** die Magnetschicht (70) aus einem hartmagnetischen bzw. hartem magnetischen Material ausgebildet ist.

8. Informationsaufzeichnungsmedium nach einem der Ansprüche 1 bis 6, **dadurch gekennzeichnet, daß** die magnetische Schicht (80) aus einem weichmagnetischen bzw. weichen magnetischenMaterial gebildet ist.

9. Informationsaufzeichnungsmedium nach einem oder mehreren der vorhergehenden Ansprüche, **dadurch gekennzeichnet, daß** sich die Magnetbalken (20a, ...) unter rechten Winkeln zu der Abtastrichtung des Magnetkopfs erstrecken.

10. Informationsaufzeichnungsmedium nach einem der Ansprüche 1 bis 8, **dadurch gekennzeichnet, daß** die Magnetbalken (20a, ...) unter einem Winkel zu der Abtastrichtung des Magnetkopfs geneigt sind.

11. Verfahren zur Herstellung eines Informationsaufzeichnungsmediums, das fähig ist, Information aufzuzeichnen und zu reproduzieren, umfassend die Schritte:
Ausbilden einer Magnetschicht (20') mit einer gleichmäßigen Dicke auf bzw. an einem Substrat (10); und
teilweises physikalisches Entfernen der Magnetschicht (20'), so daß eine Mehrzahl von Magnetbalken (20a, 20b, 20c, ...), welche einen Informationsaufzeichnungsabschnitt (20) bilden, auf dem Substrat (10) in der Abtastrichtung eines Magnetkopfs angeordnet wird,
**gekennzeichnet durch** ein Umfassen eines Schritts für ein zusätzliches Aufbringen einer magnetischen Schicht (70, 80) auf bzw. an bzw. unter den Informationsaufzeichnungsabschnitt (20).

12. Verfahren zur Herstellung eines Informationsaufzeichnungsmediums nach Anspruch 11, **dadurch gekennzeichnet, daß** die Magnetbalken (20a, ...) eine Mehrzahl von Arten beinhalten, die dieselbe Höhe und unterschiedliche Breiten in der Abtastrichtung des Magnetkopfs aufweisen.

13. Verfahren zur Herstellung eines Informationsaufzeichnungsmedium nach Anspruch 11 oder 12, **dadurch gekennzeichnet, daß** Vertiefungen bzw. Ausnehmungen (25a, 25b, 25c, ...), die durch teilweises physikalisches Entfernen der Magnetschicht (20') für die Ausbildung der Magnetbalken (20a, ...) ausgebildet werden, eine Mehrzahl von Arten beinhalten, die dieselbe Tiefe und unterschiedliche Breiten aufweisen.

14. Verfahren zur Herstellung eines Informationsaufzeichnungsmediums nach einem oder mehreren der Ansprüche 11 bis 13, **dadurch gekennzeichnet, daß** Vertiefungen (25a, ...), die durch teilweises physikalisches Entfernen der Magnetschicht (20') für die Ausbildung der Magnetbalken (20a, ...) ausgebildet werden, eine Mehrzahl von Arten mit unterschiedlichen Tiefen beinhalten.

15. Verfahren zur Herstellung eines Informationsaufzeichnungsmediums nach einem oder mehreren der Ansprüche 11 bis 14, **dadurch gekennzeichnet, daß** das Verfahren für ein physikalisches Entfernen der Magnetschicht (20') ein Aufbringen bzw. Anwenden eines Laserstrahls beinhaltet.

16. Verfahren zur Herstellung eines Informationsaufzeichnungsmediums nach einem oder mehreren der Ansprüche 11 bis 15, **dadurch gekennzeichnet, daß** es weiters einen Schritt eines zusätzlichen Aufbringens einer Abdeckschicht (30) auf bzw. an der oberen Informationsaufzeichnungsabschnitt (20) oder der Magnetschicht (70, 80) beinhaltet.

17. Verfahren zur Herstellung eines Informationsaufzeichnungsmediums nach Anspruch 11, **dadurch gekennzeichnet, daß** die Magnetschicht (70) aus einem hartmagnetischen bzw. hartem magnetischen Material ausgebildet wird.

18. Verfahren zur Herstellung eines Informationsaufzeichnungsmediums nach Anspruch 11, **dadurch gekennzeichnet, daß** die magnetische Schicht (80) aus einem weichmagnetischen bzw. weichen magnetischen Material gebildet wird.

19. Verfahren zur Herstellung eines Informationsaufzeichnungsmediums nach einem oder mehreren der Ansprüche 11 bis 18, **dadurch gekennzeichnet, daß** die Magnetbalken (20a, ...) sich unter rechten Winkeln zu der Abtastrichtung des Magnetkopfs erstrecken.

20. Verfahren zur Herstellung eines Informationsaufzeichnungsmediums nach einem oder mehreren der Ansprüche 11 bis 18, **dadurch gekennzeichnet, daß** die Magnetbalken (20a, ...) um einen Winkel zu der Abtastrichtung des Magnetkopfs geneigt sind.

## Revendications

1. Support d'enregistrement d'informations capable d'enregistrer et de reproduire des informations, comprenant un substrat (10) et une pluralité de barres magnétiques (20a, 20b, 20c,...), dans lequel
lesdites barres magnétiques (20a,...) sont formées en éliminant physiquement partiellement une couche magnétique (20') avec une épaisseur uniforme de manière à être agencées sur le substrat (10) dans le sens du balayage d'une tête magnétique, les barres magnétiques (20a,...) constituant une partie d'enregistrement d'informations (20),
**caractérisé par** une couche magnétique (70, 80) placée au-dessus ou au-dessous de la partie d'enregistrement d'informations (20).

2. Support d'enregistrement d'informations selon la revendication 1, **caractérisé en ce que** lesdites barres magnétiques (20a,...) comportent une pluralité de types ayant la même hauteur et des largeurs différentes dans le sens du balayage de la tête magnétique.

3. Support d'enregistrement d'informations selon une ou plusieurs des revendications précédentes, **caractérisé en ce que** des cavités (25a, 25b, 25c,...) formées en éliminant physiquement partiellement la couche magnétique (20') pour la formation des barres magnétiques (20a,...) comportent une pluralité de types ayant la même profondeur et des largeurs différentes.

4. Support d'enregistrement d'informations selon une ou plusieurs des revendications précédentes, **caractérisé en ce que** les cavités (25a,...) formées en éliminant physiquement partiellement la couche magnétique (20') pour la formation des barres magnétiques (20a,...) comportent une pluralité de types ayant des profondeurs différentes.

5. Support d'enregistrement d'informations selon une ou plusieurs des revendications précédentes, **caractérisé en ce que** ladite couche magnétique (20') est éliminée physiquement par irradiation avec un faisceau laser.

6. Support d'enregistrement d'informations selon une ou plusieurs des revendications précédentes, **caractérisé en ce qu'**il comprend en outre une couche invisible (30) placée sur la couche magnétique (70, 80) la plus haute.

7. Support d'enregistrement d'informations selon une ou plusieurs des revendications précédentes, **caractérisé en ce que** ladite couche magnétique (70) est formée d'un matériau fortement magnétique.

8. Support d'enregistrement d'informations selon les revendications 1 à 6, **caractérisé en ce que** ladite couche magnétique (80) est formée d'un matériau faiblement magnétique.

9. Support d'enregistrement d'informations selon une ou plusieurs des revendications précédentes, **caractérisé en ce que** lesdites barres magnétiques (20a,...) s'étendent à angles droits par rapport à la direction du balayage de la tête magnétique.

10. Support d'enregistrement d'informations selon les revendications 1 à 8, **caractérisé en ce que** lesdites barres magnétiques (20a,...) sont inclinées selon un certain angle par rapport à la direction du balayage de la tête magnétique.

11. Procédé de fabrication d'un support d'enregistrement d'informations capable d'enregistrer et de reproduire des informations, comprenant les étapes consistant à :
former une couche magnétique (20') avec une épaisseur uniforme sur un substrat (10) ; et
éliminer physiquement partiellement la couche magnétique (20') de façon qu'une pluralité de barres magnétiques (20a, 20b, 20c,...) constituant une partie d'enregistrement d'informations (20) soient agencées sur le substrat (10) dans le sens du balayage d'une tête magnétique,
**caractérisé en ce qu'**il comprend une étape pour placer en plus une couche magnétique (70, 80) au-dessus ou au-dessous de la partie d'enregistrement d'informations (20).

12. Procédé de fabrication d'un support d'enregistrement d'informations selon la revendication 11, **caractérisé en ce que** lesdites barres magnétiques (20a,...) comportent une pluralité de types ayant la même hauteur et des largeurs différentes dans le sens du balayage de la tête magnétique.

13. Procédé de fabrication d'un support d'enregistrement d'informations selon la revendication 11 ou 12, **caractérisé en ce que** des cavités (25a, 25b, 25c,...) formées en éliminant physiquement partiellement la couche magnétique (20') pour la formation des barres magnétiques (20a,...) comportent une pluralité de types ayant la même profondeur et des largeurs différentes.

14. Procédé de fabrication d'un support d'enregistrement d'informations selon une ou plusieurs des revendications 11 à 13, **caractérisé en ce que** les cavités (25a,...) formées en éliminant physiquement partiellement la couche magnétique (20') pour la formation des barres magnétiques (20a,...) comportent une pluralité de types ayant des profondeurs différentes.

15. Procédé de fabrication d'un support d'enregistrement d'informations selon une ou plusieurs des revendications 11 à 14, **caractérisé en ce que** ledit processus pour éliminer physiquement la couche magnétique (20') comporte l'application d'un faisceau laser.

16. Procédé de fabrication d'un support d'enregistrement d'informations selon une ou plusieurs des revendications 11 à 15, **caractérisé en ce qu'**il comprend en outre une étape pour placer en plus une couche invisible (30) sur la couche magnétique (70, 80) la plus haute.

17. Procédé de fabrication d'un support d'enregistrement d'informations selon la revendication 11, **caractérisé en ce que** ladite couche magnétique (70) est formée d'un matériau fortement magnétique.

18. Procédé de fabrication d'un support d'enregistrement d'informations selon la revendication 11, **caractérisé en ce que** ladite couche magnétique (80) est formée d'un matériau faiblement magnétique.

19. Procédé de fabrication d'un support d'enregistrement d'informations selon une ou plusieurs des revendications 11 à 18, **caractérisé en ce que** lesdites barres magnétiques (20a,...) s'étendent à angles droits par rapport à la direction du balayage de la tête magnétique.

20. Procédé de fabrication d'un support d'enregistrement d'informations selon une ou plusieurs des revendications 11 à 18, **caractérisé en ce que** lesdites barres magnétiques (20a,...) sont inclinées selon un certain angle par rapport à la direction du balayage de la tête magnétique.
